# FASCICULE DE BREVET EUROPEEN

(11) **EP 4 429 904 B1**
(45) Date de publication et mention de la délivrance du brevet: **26.11.2025**
(21) Numéro de dépôt: 22814392.1
(22) Date de dépôt: 09.11.2022
(51) Int. Cl.: B60J 1/00, B60J 1/20, H04R 7/04, H04R 9/06, H04R 17/00, B60S 1/08

(54) **VITRAGE DE VÉHICULE ADAPTÉ POUR UNE ÉMISSION ET/OU UNE RÉCEPTION ACOUSTIQUE**
FAHRZEUGVERGLASUNG FÜR AKUSTISCHE ÜBERTRAGUNG UND/ODER AKUSTISCHEN EMPFANG
VEHICLE GLAZING SUITABLE FOR ACOUSTIC TRANSMISSION AND/OR RECEPTION

(30) Priorité: 10.11.2021 FR 2111936
(43) Date de publication de la demande: 18.09.2024
(73) Titulaire: Saint-Gobain Sekurit France, 60150 Thourotte (FR)
(72) Inventeur: QI, Shuibao, 92400 COURBEVOIE (FR); SILVESTRINI, Laurent, 92400 COURBEVOIE (FR); YU, Buyin, 92400 COURBEVOIE (FR)
(74) Mandataire: Saint-Gobain Recherche
(86) Numéro de dépôt international: PCT/EP2022/081318
(87) Numéro de publication internationale: WO 2023/083883

(56) Documents cités:
- EP-A1- 0 847 666
- US-A- 4 768 256
- US-A1- 2009 074 200
- US-B1- 6 751 333

## Description

### DOMAINE DE L'INVENTION

La présente invention concerne le domaine des vitrages de véhicule.

### ETAT DE LA TECHNIQUE

Les excitateurs audio de surface permettent de générer un son à partir d'une membrane formée par une paroi, par exemple en plâtre, en verre, ou en bois. La génération du son est entraînée par les vibrations de la paroi sur laquelle l'excitateur est monté fixe, via une connexion rigide. Le système comprenant l'excitateur et la paroi permet ainsi d'émettre et/ou de recevoir des ondes acoustiques et vibratoires. Ce système peut également permettre de contrôler activement un bruit ou des vibrations.

Le document EP3725968 décrit par exemple un dispositif comprenant un vitrage et un excitateur (également appelé actionneur ou transducteur), dans lequel l'excitateur est monté fixe sur le vitrage. Le vitrage forme le toit d'un véhicule. Un support est monté fixe au vitrage, et l'excitateur est encliqueté au support.

Toutefois, l'émission et la réception par le dispositif d'ondes acoustiques à des pressions élevées dans les moyennes et hautes fréquences, c'est à dire pour des fréquences comprises entre 250 hertz et 20 kilohertz est limitée.

Le document US 2009/074200 Al décrit un vitrage similaire au préambule de la revendication 1.

### Exposé de l'invention

Un but de l'invention est de proposer un dispositif comprenant un excitateur et une membrane formée par un vitrage, permettant d'émettre et/ou de recevoir des ondes acoustiques à des pressions acoustiques plus élevées que les pressions acoustiques émises et/ou reçues par les dispositifs connus.

Ce but est atteint dans le cadre de la présente invention grâce à un vitrage de véhicule adapté pour une émission et/ou une réception acoustique, comprenant un excitateur et un ensemble vitré, l'excitateur comprenant une partie de liaison et une partie mobile, l'excitateur étant configuré pour entraîner un déplacement entre la partie de liaison et la partie mobile par un contrôle électrique,
le vitrage comprenant au moins un espaceur,
la partie de liaison comprenant une partie de montage et une partie suspendue,
l'espaceur étant monté fixe à la partie de montage et à l'ensemble vitré,
la partie suspendue présentant une première face et l'ensemble vitré présentant une deuxième face, la première face étant agencée en regard de la deuxième face, le vitrage comprenant une cavité agencée entre la première face et la deuxième face, la cavité étant formée en partie par la première face et préférentiellement en partie par la deuxième face.

La présente invention est avantageusement complétée par les caractéristiques suivantes, prises individuellement ou en l'une quelconque de leurs combinaisons techniquement possibles :
- la cavité est formée en partie par la première face et en partie par la deuxième face et présente une épaisseur e définie entre la première face et la deuxième face, l'épaisseur eentre la première face et la deuxième face étant comprise entre 1 mm et 5 cm, notamment entre 1,5 mm et 1,5 cm, et préférentiellement comprise entre 2 mm et 1 cm,
- l'espaceur est monté fixe de manière amovible à la partie de montage,
- la partie mobile est encapsulée dans la partie de liaison,
- le vitrage comprend une pluralité d'espaceurs, la partie de liaison comprenant une pluralité de parties de montage, chaque espaceur étant monté fixe à une partie de montage, les parties de montage étant agencées autours de la partie suspendue,
- l'espaceur est monté fixe à l'élément vitré par collage, l'élément vitré comprenant au moins une feuille de verre, le vitrage comprenant une couche de colle agencée entre la feuille de verre et l'espaceur, la couche de colle étant en contact avec l'espaceur, la couche de colle comprenant préférentiellement du polyuréthane, et le vitrage comprenant préférentiellement une couche de primaire agencée entre la feuille de verre et la couche de colle,
- l'espaceur comprend une face de collage agencée à une extrémité de l'espaceur, la face de collage présentant au moins un bossage, le bossage étant en contact direct avec la feuille de verre, la couche de colle étant en contact direct avec la face de collage et longeant le bossage, préférentiellement entourant le bossage,
- l'espaceur est configuré pour ajuster l'épaisseur séparant l'élément vitré et la partie de montage sur laquelle l'espaceur est monté fixe,
- l'espaceur est une vis,
- l'espaceur est une vis, la vis présentant une tête et une pointe, la tête comprenant la face de collage,
- l'ensemble vitré est un vitrage feuilleté comprenant au moins deux feuilles de verre et une couche intercalaire agencée entre les deux feuilles de verre, la couche intercalaire comprenant de préférence du PVB (polyvinyle butyral) ou un copolymère éthylène-acétate de vinyle,

Un autre aspect de l'invention est un haut-parleur comprenant un vitrage selon un mode de réalisation de l'invention.

Un autre aspect de l'invention est un microphone comprenant un vitrage selon un mode de réalisation de l'invention.

Un autre aspect de l'invention est un procédé d'émission et/ou de réception acoustique mise(s) en œuvre par un vitrage selon un mode de réalisation de l'invention, le procédé comprenant les étapes de :
- transmission ou réception d'une onde acoustique entre l'excitateur et l'ensemble vitré, par une propagation de l'onde dans un milieu solide formé par l'espaceur, et simultanément,
- transmission ou réception de l'onde acoustique entre l'excitateur et l'ensemble vitré par une propagation de l'onde dans un milieu gazeux formé par la cavité.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig.1] la [Fig.1] illustre un vitrage comprenant un excitateur et un élément vitré selon un mode de réalisation de l'invention, en vue isométrique,
[Fig.2] la [Fig.2] illustre un vitrage comprenant un excitateur et un élément vitré selon un mode de réalisation de l'invention, en vue de côté,
[Fig.3] la [Fig.3] illustre une distribution en fréquence de la pression acoustique émise par un vitrage selon un mode de réalisation de l'invention et par un vitrage connu,
[Fig.4] la [Fig.4] illustre un collage entre un espaceur formé par une vis et un ensemble vitré.

Sur l'ensemble des figures, les éléments similaires portent des références identiques.

### DEFINITIONS

On entend par « *onde acoustique »* toute onde propagée par des perturbations mécaniques dans un milieu élastique, que le milieu soit solide, liquide et/ou gazeux.

### DESCRIPTION DETAILLEE DE L'INVENTION

### Architecture générale du vitrage 1

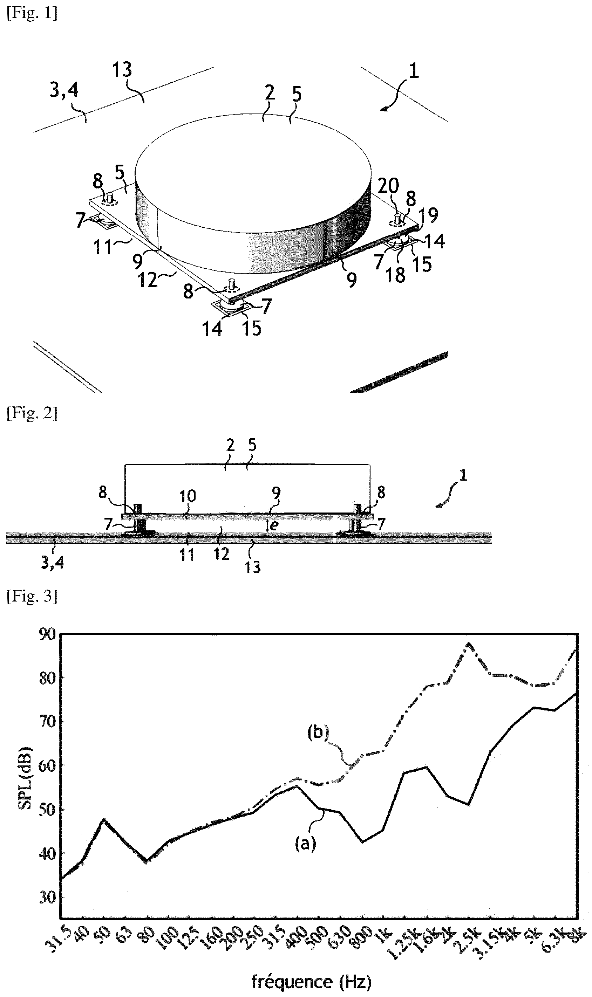

En référence à la [Fig.1] et à la [Fig.2], un vitrage 1 de véhicule est adapté pour une émission et/ou une réception acoustique. De préférence, le vitrage 1 peut être un haut-parleur et/ou un microphone.

Le vitrage 1 comprend un excitateur 2, également désigné par le terme actionneur, ou transducteur. L'excitateur 2 comprend une partie de liaison 5 et une partie mobile 6. L'excitateur 2 est configuré pour entraîner un déplacement entre la partie de liaison 5 et la partie mobile 6 par un contrôle électrique. L'excitateur 2 est adapté pour faire vibrer un ensemble vitré 4 pour produire une onde acoustique. Inversement, l'excitateur 2 est adapté pour émettre un signal électrique lors d'un déplacement entre la partie de liaison 5 et la partie mobile 6, lors de la réception d'une onde acoustique par un ensemble vitré 4.

Le vitrage 1 comprend un ensemble vitré 4. Le vitrage 1 comprend au moins un espaceur 7. La partie de liaison 5 comprend une partie de montage 8 et une partie suspendue 9. L'espaceur 7 est monté fixe à la partie de montage 8 et à l'ensemble vitré 4. De préférence, l'espaceur 7 présente deux extrémités : l'une des deux extrémités peut être montée fixe à la partie de montage 8 et l'autre des deux extrémités peut être montée fixe à l'ensemble vitré 4.

La partie suspendue 9 présente une première face 10. L'ensemble vitré 4 présente une deuxième face 11. La première face 10 est agencée en regard de la deuxième face 11. Le vitrage 1 comprend une cavité 12 agencée entre la première face 10 et la deuxième face 11, la cavité 12 étant formée en partie par la première face 10 et préférentiellement aussi en partie par la deuxième face 11. En variante, la cavité 12 peut être formée en partie par la première face et en partie par une autre face, par exemple appartenant à un support monté fixe sur l'élément vitré 4, l'autre face étant agencée entre la première face 10 et la deuxième face 11 et étant en regard direct de la première face 10.

Ainsi, l'excitateur 2 est configuré pour transmettre ou recevoir une onde acoustique se propageant entre l'ensemble vitré 4 et l'excitateur 2 par une propagation de l'onde dans un milieu solide formé par l'espaceur 7, et, simultanément, transmettre ou recevoir une onde acoustique se propageant entre l'ensemble vitré 4 et l'excitateur 2 par une propagation de l'onde dans un milieu gazeux formé par la cavité 12. Les inventeurs ont découvert que la double transmission de l'onde, à la fois par un milieu solide et par un milieu gazeux, permet une meilleure restitution des ondes présentant une longueur d'onde comprise entre 200 Hz et 20 kHz, c'est-à-dire dans les moyennes fréquences ou dans les hautes fréquences acoustiques. Les ondes acoustiques propagées dans l'espaceur 7 sont alors également propagées par l'intermédiaire de la partie de montage 8, qui ne se déplace pas par rapport à l'ensemble vitré 4 lors de l'activation de l'excitateur 2. Les ondes acoustiques propagées dans la cavité sont également propagées par l'intermédiaire de la partie suspendue 9, qui se déplace par rapport à l'ensemble vitré 4, de préférence qui vibre, lors de l'activation de l'excitateur 2.

Un autre aspect de l'invention est un procédé d'émission et/ou de réception acoustique mise(s) en œuvre par un vitrage 1 selon un mode de réalisation de l'invention. Le procédé comprend les étapes simultanées de :
- transmission ou réception d'une onde acoustique entre l'excitateur 2 et l'ensemble vitré 4, par une propagation de l'onde dans un milieu solide formé par l'espaceur 7, et de
- transmission ou réception de l'onde acoustique entre l'excitateur 2 et l'ensemble vitré 4 par une propagation de l'onde dans un milieu gazeux formé par la cavité 12.

Ainsi, de par la double transmission de l'onde, à la fois par un milieu solide et par un milieu gazeux, le procédé permet une meilleure restitution des ondes acoustiques présentant une longueur d'onde comprise entre 200 Hz et 20 kHz, c'est-à-dire dans les moyennes fréquences ou dans les hautes fréquences, au regard d'un procédé connu mettant en œuvre un vitrage comprenant un excitateur et un élément vitré.

### Ensemble vitré 4

Un ensemble vitré 4 comprend au moins une feuille de verre 13. L'ensemble vitré 4 peut comprendre une feuille de verre 13, ou bien former un vitrage feuilleté comprenant au moins deux feuilles de verre 13 entre lesquelles une couche intercalaire en matière plastique viscoélastique est agencée.

L'ensemble vitré 4 peut être transparent ou opaque. L'ensemble vitré 4 peut comprendre un revêtement opaque. Le revêtement opaque peut être une peinture ou un émail, par exemple de couleur noire. L'ensemble vitré 4 peut comprendre une partie vitrée transparente et une partie vitrée opaque. La partie vitrée opaque put entourer la partie vitrée transparente. L'ensemble vitré 4 peut être teinté dans l'épaisseur, sur tout ou partie de la surface de l'ensemble vitré 4.

La feuille de verre 13 peut être en verre organique ou minéral. La feuille de verre 13 peut être en verre trempé.

L'ensemble vitré 4 peut former un vitrage feuilleté. Par « *vitrage feuilleté* », on entend que l'ensemble vitré 4 comprend au moins deux feuilles de verre 13 entre lesquelles une couche intercalaire en matière plastique viscoélastique est agencée. Ainsi, la transmission acoustique du vitrage 1 est plus homogène dans le spectre acoustique d'émission que pour un vitrage 1 comprenant uniquement une feuille de verre 13.

La couche intercalaire en matière plastique viscoélastique peut comprendre une ou plusieurs couches d'un polymère viscoélastique tel que du poly(butyral de vinyle) (PVB) ou un copolymère éthylène-acétate de vinyle (EVA), et préférentiellement du PVB. La couche intercalaire est de préférence en PVB standard ou, préférentiellement, en PVB acoustique (tel que le PVB acoustique mono-couche ou tri-couche). Le PVB acoustique comprend trois couches : deux couches externes en PVB standard et une couche interne en PVB, comprenant un taux de plastifiant supérieur au taux de plastifiant du PVB standard, ce qui permet de rendre la couche interne moins rigide que les couches externes. L'utilisation, dans un vitrage feuilleté, d'un PVB acoustique, par rapport à un PVB standard, permet d'encore améliorer la restitution en basses fréquence et de réduire des problèmes vibratoires.

Le vitrage 1 est un vitrage de véhicule. En particulier, le vitrage 1 peut être choisi parmi un pare-brise, un vitrage latéral, un vitrage de portière, une lunette arrière et un vitrage de toit. Le vitrage 1 peut présenter une forme quadrilatérale, notamment une forme rectangulaire, ou une forme trapézoïdale. Le vitrage 1 peut présenter des bords droits ou courbes.

### Excitateur 2

Le vitrage 1 peut comprendre un excitateur 2 audio unique, ou au moins deux excitateurs 2 audio, ou au moins 4, ou au moins 5, ou au moins 10, ou au moins 15 excitateurs audio, par exemple de 1 à 2, ou de 2 à 3, ou de 3 à 4, ou de 4 à 5, ou de 5 à de 5 à 6, ou de 6 à 7, ou de 7 à 8, ou de 8 à 9, ou de 9 à 10, ou de 10 à 12, ou de 12 à 15, ou de 15 à 20 excitateurs 2 audio.

L'excitateur 2 peut être un excitateur audio piézoélectrique ou un excitateur audio électrodynamique (ou excitateur à inertie). De préférence, l'excitateur 2 audio est un excitateur électrodynamique. En effet, un excitateur 2 électrodynamique requiert une tension électrique moins grande qu'un excitateur 2 piézoélectrique et comprend des composants électriques plus légers et moins onéreux que ceux d'un excitateur 2 piézoélectrique.

En référence à la [Fig.1] et à la [Fig.2], la partie mobile 6 peut être encapsulée dans la partie de liaison 5. Ainsi, la partie mobile 5 peut être protégée des contraintes mécaniques extérieures.

L'excitateur 2 audio peut présenter une masse inférieure à 300 g, de préférence comprise entre 100 g à 200 g. L'excitateur 2 peut présenter un diamètre compris entre 10 mm et 150 mm, de préférence compris entre 30 mm et 100 mm. L'excitateur 2 peut présenter une épaisseur comprise entre 10 mm et 50 mm, de préférence comprise entre 12 mm et 30 mm.

L'excitateur 2 peut être configuré pour générer des hautes fréquences et/ou des moyennes fréquences et/ou des basses fréquences. Par *« hautes fréquences* », on entend les ondes sonores de fréquence supérieure à 2000 Hz. Par *« moyennes fréquences* », on entend les ondes sonores de fréquence allant de 200 à 2000 Hz. Par « *basses fréquences* », on entend les ondes sonores de fréquence inférieure à 200 Hz. L'excitateur audio peut comprendre un filtre de signal pour limiter la bande de fréquences générées, par exemple à des fréquences hautes et/ou moyennes et/ou basses. Le filtre de signal peut limiter la bande de fréquences émises à une plage de fréquences, cette plage de fréquences ayant une borne inférieure qui est supérieure ou égale à 2000 Hz, ou qui est supérieure ou égale à 200 Hz, ou qui est supérieure ou égale à 150 Hz, ou cette plage de fréquences ayant une borne supérieure qui est inférieure ou égale à 200 Hz.

L'excitateur 2 audio peut être monté fixe sur une zone périphérique de l'ensemble vitré 4. La zone périphérique de l'ensemble vitré peut être une zone de l'ensemble vitré 4 adjacente aux bords de la feuille de verre ou de l'ensemble vitré et de largeur (c'est-à-dire selon une direction orthogonale au bord de l'ensemble vitré, dans le plan de l'ensemble vitré) inférieure ou égale à 30 cm, ou inférieure ou égale à 25 cm, ou inférieure ou égale à 20 cm, ou inférieure ou égale à 15 cm.

Lorsque le vitrage est un pare-brise, l'excitateur 2 peut être situé sur une zone périphérique de l'ensemble vitré adjacente au bord supérieur de l'ensemble vitré (c'est-à-dire le bord destiné à être du côté du haut du véhicule), et de préférence dans une zone centrale de cette zone périphérique supérieure (par exemple dans une partie de la zone périphérique supérieure s'étendant sur une longueur de 30 cm, de préférence de 20 cm, selon une direction parallèle au bord supérieur du pare-brise, de part et d'autre du centre du bord supérieur). Lorsque le pare-brise comprend un rétroviseur intérieur ou est destiné à comprendre un rétroviseur, l'excitateur 2 peut être agencé dans le voisinage des fixations du rétroviseur intérieur du pare-brise (par exemple dans une zone du pare-brise circulaire de rayon inférieur ou égal à 15 cm dont le centre est formé par les fixations du rétroviseur intérieur ou par l'emplacement destiné à recevoir les fixations du rétroviseur intérieur). L'ensemble vitré 4 peut comprendre un ou plusieurs trous permettant un passage de fils d'alimentation de l'excitateur 2.

### Cavité 12

En référence à la [Fig.2], la cavité 12 est agencée entre la première face 10 et la deuxième face 11. De préférence, la cavité 12 est formée par la première face 10 et par la deuxième face 11. La cavité 12 présente une épaisseur e définie entre la première face 10 et la deuxième face 11. L'épaisseur e entre la première face 10 et la deuxième face 11 peut être comprise entre 1 mm et 5 cm, notamment entre 1,5 mm et 1,5 cm, et préférentiellement comprise entre 2 mm et 1 cm. Ainsi, il est possible de propager une onde acoustique dans les moyennes fréquences et dans les hautes fréquences entre l'excitateur 2 et l'ensemble vitré 4 en minimisant les interférences par réflexion acoustiques, de par une épaisseur e supérieure à 1 mm, et en limitant les pertes acoustiques, de par une épaisseur e inférieure à 5 cm.

La [Fig.3] illustre une pression acoustique émise par un vitrage 1 selon un mode de réalisation de l'invention et émise par un vitrage connu. La courbe (a) illustre la pression acoustique émise par un vitrage connu. La courbe (b) illustre la pression acoustique émise par un vitrage 1 selon un mode de réalisation de l'invention. Il est possible d'observer une augmentation de la pression acoustique pour un vitrage selon un mode de réalisation de l'invention au regard d'un vitrage connu lors d'une émission d'onde acoustique pour des fréquences moyennes et des hautes fréquences.

De préférence, la cavité 12 est formée par deux faces strictement parallèles. La première face 10 et la deuxième face 11 peuvent être strictement parallèles. Ainsi, il est possible d'éviter des interférences acoustiques entraînées par une différence de chemin des ondes traversant la cavité 12.

### Espaceur(s) 7

L'espaceur 7 peut être monté fixe de manière amovible à la partie de montage 8. Ainsi, comme la durée de vie d'un excitateur est généralement moins élevée que la durée de vie d'un véhicule, il est possible de remplacer l'excitateur 2 dans le vitrage 1 s'il ne fonctionne plus.

Le vitrage 1 comprend de préférence une pluralité d'espaceurs 7. La partie de liaison 5 peut comprendre une pluralité de parties de montage 8, chaque espaceur 7 étant monté fixe à une partie de montage 8.

De préférence, les parties de montage 8 sont agencées autours de la partie suspendue 9. Ainsi, la partie suspendue 9 peut vibrer avec une plus grande amplitude lors d'une activation de l'excitateur 2, permettant de transmettre une pression acoustique plus élevée dans la cavité 12. Par exemple, en référence à la [Fig.1] et à la [Fig.2], des parties de montage 8 et la partie suspendue 9 peuvent former un carré, les parties de montage 8 étant réparties dans les coins du carré.

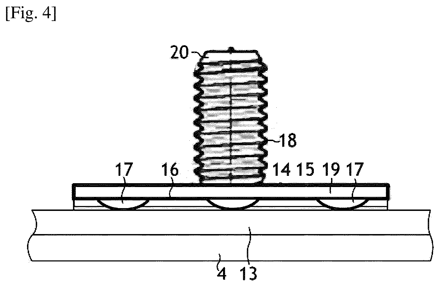

En référence à la [Fig.4], le vitrage 1 peut être monté fixe à l'élément vitré 4 par collage. Le vitrage 1 comprend au moins une feuille de verre 13. Le vitrage 1 peut comprendre une couche de colle 14 agencée entre la feuille de verre 13 et l'espaceur 7 et en contact avec l'espaceur 7., La couche de colle 14 peut comprendre du polyuréthane (PU). Le vitrage 1 peut comprendre une couche de primaire 15 (également appelé « *primer »* en anglais) agencée entre la feuille de verre 13 et la couche de colle 14. La couche de primaire 15 peut comprendre de l'acétate d'éthyle, en particulier lorsque la feuille de verre 13 est une feuille de verre organique. La couche de primaire 15 peut être par exemple formée par le primaire « Silka Primer 209 D ». La couche de primaire 15 peut comprendre des polyisocyanates, en particulier lorsque la feuille de verre 13 est une feuille de verre minérale.

L'espaceur 7 peut comprendre une face de collage 16 agencée à une extrémité de l'espaceur 7. La face de collage 16 peut présenter au moins un bossage 17. Le bossage 17 est en contact direct avec la feuille de verre 13. La couche de colle 14 peut être en contact direct avec la face de collage 16 et longe le bossage 17, préférentiellement entoure le bossage 17. Ainsi, il est possible de coller l'espaceur 7 à l'ensemble vitré 4 tout en contrôlant avec exactitude l'épaisseur e de par le contact entre l'espaceur 7 et l'élément vitré 4, et ainsi éviter des variations d'épaisseur e entraînées par les conditions mécaniques du collage. De préférence, la face de collage 16 présente une pluralité de bossages 17. Ainsi, l'épaisseur e peut être contrôlée avec exactitude entre les différents points de contact formés entre chacun des bossages 17 et l'ensemble vitré 4.

L'espaceur 7 peut être configuré pour ajuster l'épaisseur e séparant l'élément vitré 4 et la partie de montage 8 sur laquelle l'espaceur 7 est monté fixe. Ainsi, il est possible de favoriser l'émission ou la réception d'ondes acoustiques comprises dans une gamme prédéterminée de fréquence. En effet, les inventeurs ont découvert que la pression acoustique en sortie du vitrage 1 est dépendante de l'épaisseur e de la cavité pour une gamme de fréquences donnée.

L'espaceur 7 peut être une vis 18. Ainsi, la vis 18 permet à la fois d'ajuster l'épaisseur séparant l'élément vitré 4 et la partie de montage 8, par exemple en ajustant la position d'un boulon compris dans l'excitateur 2, et à la fois de monter fixe de manière amovible l'espaceur à l'excitateur 2. La vis 18 peut présenter une tête 19 et une pointe 20. En référence à la [Fig.4], la tête 19 peut comprendre la face de collage 16. La tête 19 comprend au moins un bossage 17 en contact direct avec l'élément vitré 4.

## Revendications

1. Vitrage (1) de véhicule adapté pour une émission et/ou une réception acoustique, comprenant un excitateur (2) et un ensemble vitré (4), l'excitateur (2) comprenant une partie de liaison (5) et une partie mobile (6), l'excitateur (2) étant configuré pour entraîner un déplacement entre la partie de liaison (5) et la partie mobile (6) par un contrôle électrique,
le vitrage (1) étant **caractérisé en ce qu'**il comprend au moins un espaceur (7),
la partie de liaison (5) comprenant une partie de montage (8) et une partie suspendue (9),
l'espaceur (7) étant monté fixe à la partie de montage (8) et à l'ensemble vitré (4),
la partie suspendue (9) présentant une première face (10) et l'ensemble vitré (4) présentant une deuxième face (11), la première face (10) étant agencée en regard de la deuxième face (11), le vitrage (1) comprenant une cavité (12) agencée entre la première face (10) et la deuxième face (11), la cavité (12) étant formée en partie par la première face (10) et préférentiellement en partie par la deuxième face (11).

2. Vitrage (1) selon la revendication précédente, dans lequel la cavité (12) est formée en partie par la première face (10) et en partie par la deuxième face (11) et présente une épaisseur e définie entre la première face (10) et la deuxième face (11), l'épaisseur eentre la première face (10) et la deuxième face (11) étant comprise entre 1 mm et 5 cm, notamment entre 1,5 mm et 1,5 cm, et préférentiellement comprise entre 2 mm et 1 cm.

3. Vitrage (1) selon l'une des revendications précédentes, dans lequel l'espaceur (7) est monté fixe de manière amovible à la partie de montage (8).

4. Vitrage (1) selon l'une des revendications précédentes, dans lequel la partie mobile (6) est encapsulée dans la partie de liaison (5).

5. Vitrage (1) selon l'une des revendications précédentes, comprenant une pluralité d'espaceurs (7), la partie de liaison (5) comprenant une pluralité de parties de montage (8), chaque espaceur (7) étant monté fixe à une partie de montage (8), les parties de montage (8) étant agencées autours de la partie suspendue (9).

6. Vitrage (1) selon l'une des revendications précédentes, dans lequel l'espaceur (7) est monté fixe à l'élément vitré (4) par collage, l'élément vitré (4) comprenant au moins une feuille de verre (13), le vitrage (1) comprenant une couche de colle (14) agencée entre la feuille de verre (13) et l'espaceur (7), la couche de colle (14) étant en contact avec l'espaceur (7), la couche de colle (14) comprenant préférentiellement du polyuréthane, et le vitrage (1) comprenant préférentiellement une couche de primaire (15) agencée entre la feuille de verre (13) et la couche de colle (14).

7. Vitrage (1) selon la revendication 6, dans lequel l'espaceur (7) comprend une face de collage (16) agencée à une extrémité de l'espaceur (7), la face de collage (16) présentant au moins un bossage (17), le bossage (17) étant en contact direct avec la feuille de verre (13), la couche de colle (14) étant en contact direct avec la face de collage (16) et longeant le bossage (17), préférentiellement entourant le bossage (17).

8. Vitrage (1) selon l'une des revendications précédentes, dans lequel l'espaceur (7) est configuré pour ajuster l'épaisseur séparant l'élément vitré (4) et la partie de montage (8) sur laquelle l'espaceur (7) est monté fixe.

9. Vitrage (1) selon la revendication 8, dans lequel l'espaceur (7) est une vis (18).

10. Vitrage (1) selon la revendication 7, dans lequel l'espaceur est une vis (18), la vis (18) présentant une tête (19) et une pointe (20), la tête (19) comprenant la face de collage (16).

11. Vitrage (1) selon l'une des revendications précédentes, dans lequel l'ensemble vitré est un vitrage feuilleté comprenant au moins deux feuilles de verre (13) et une couche intercalaire agencée entre les deux feuilles de verre (13), la couche intercalaire comprenant de préférence du PVB (polyvinyle butyral) ou un copolymère éthylène-acétate de vinyle.

12. Haut-parleur comprenant un vitrage (1) selon l'une des revendications précédentes.

13. Microphone comprenant un vitrage (1) selon l'une des revendications précédentes.

14. Procédé d'émission et/ou de réception acoustique mise(s) en œuvre par un vitrage (1) selon l'une des revendications 1 à 11, le procédé comprenant les étapes de :
- transmission ou réception d'une onde acoustique entre l'excitateur (2) et l'ensemble vitré (4), par une propagation de l'onde dans un milieu solide formé par l'espaceur (7), et, simultanément,
- transmission ou réception de l'onde acoustique entre l'excitateur (2) et l'ensemble vitré (4) par une propagation de l'onde dans un milieu gazeux formé par la cavité (12).

## Patentansprüche

1. Fahrzeugverglasung (1), die für eine akustische Aussendung und/oder einen akustischen Empfang geeignet ist und umfassend einen Erreger (2) und eine Glasbaugruppe (4), der Erreger (2) umfassend ein Verbindungsteil (5) und ein bewegliches Teil (6), wobei der Erreger (2) zum Bewirken einer Verschiebung zwischen dem Verbindungsteil (5) und dem beweglichen Teil (6) durch eine elektrische Steuerung konfiguriert ist,
wobei die Verglasung (1) **dadurch gekennzeichnet ist, dass** sie mindestens einen Abstandshalter (7) umfasst,
das Verbindungsteil (5) umfassend ein Montageteil (8) und ein Hängeteil (9),
wobei der Abstandshalter (7) mit dem Montageteil (8) und der Glasbaugruppe (4) fest montiert ist,
wobei das Hängeteil (9) eine erste Fläche (10) aufweist und die Glasbaugruppe (4) eine zweite Fläche (11) aufweist, wobei die erste Fläche (10) gegenüber der zweiten Fläche (11) eingerichtet ist, die Verglasung (1) umfassend einen Hohlraum (12), der zwischen der ersten Fläche (10) und der zweiten Fläche (11) eingerichtet ist, wobei der Hohlraum (12) teilweise durch die erste Fläche (10) und vorzugsweise teilweise durch die zweite Fläche (11) ausgebildet ist.

2. Verglasung (1) nach dem vorstehenden Anspruch, wobei der Hohlraum (12) teilweise durch die erste Fläche (10) und teilweise durch die zweite Fläche (11) ausgebildet ist und eine Dicke e aufweist, die zwischen der ersten Fläche (10) und der zweiten Fläche (11) definiert ist, die Dicke e zwischen der ersten Fläche (10) und der zweiten Fläche (11) zwischen 1 mm und 5 cm, insbesondere zwischen 1,5 mm und 1,5 cm liegt und vorzugsweise zwischen 2 mm und 1 cm liegt.

3. Verglasung (1) nach einem der vorstehenden Ansprüche, wobei der der Abstandshalter (7) an dem Montageteil (8) auf abnehmbare Art und Weise fest montiert ist.

4. Verglasung (1) nach einem der vorstehenden Ansprüche, wobei das bewegliche Teil (6) in dem Verbindungsteil (5) eingekapselt ist.

5. Verglasung (1) nach einem der vorstehenden Ansprüche, umfassend eine Vielzahl von Abstandshaltern (7), das Verbindungsteil (5) umfassend eine Vielzahl von Montageteilen (8), wobei jeder Abstandshalter (7) an einem Montageteil (8) fest montiert ist, wobei die Montageteile (8) um das Hängeteil (9) herum eingerichtet sind.

6. Verglasung (1) nach einem der vorstehenden Ansprüche, wobei der Abstandshalter (7) an dem Glaselement (4) durch Kleben fest montiert ist, das Glaselement (4) mindestens umfassend eine Glasscheibe (13), die Verglasung (1) umfassend eine Klebstoffschicht (14), die zwischen der Glasscheibe (13) und dem Abstandshalter (7) eingerichtet ist, wobei die Klebstoffschicht (14) mit dem Abstandshalter (7) in Kontakt steht, die Klebstoffschicht (14) umfassend vorzugsweise Polyurethan und die Verglasung (1) umfassend vorzugsweise eine Grundierungsschicht (15), die zwischen der Glasscheibe (13) und der Klebstoffschicht (14) eingerichtet ist.

7. Verglasung (1) nach Anspruch 6, wobei der Abstandshalter (7) eine Klebefläche (16), die an einem Ende des Abstandshalters (7) eingerichtet ist, umfasst, wobei die Klebefläche (16) mindestens einen Vorsprung (17) aufweist, wobei der Vorsprung (17) mit der Glasscheibe (13) in direktem Kontakt steht, wobei die Klebstoffschicht (14) mit der Klebefläche (16) in direktem Kontakt steht und entlang des Vorsprungs (17), vorzugsweise den Vorsprung (17) umgebend, verläuft.

8. Verglasung (1) nach einem der vorstehenden Ansprüche, wobei der Abstandshalter (7) zum Anpassen der Dicke konfiguriert ist, die das Glaselement (4) und das Montageteil (8), auf dem der Abstandhalter (7) fest montiert ist, trennt.

9. Verglasung (1) nach Anspruch 8, wobei der Abstandshalter (7) eine Schraube (18) ist.

10. Verglasung (1) nach Anspruch 7, wobei der Abstandshalter eine Schraube (18) ist, wobei die Schraube (18) einen Kopf (19) und eine Spitze (20) aufweist, der Kopf (19) umfassend die Klebefläche (16).

11. Verglasung (1) nach einem der vorstehenden Ansprüche, wobei die Glasbaugruppe eine Verbundverglasung ist, umfassend mindestens zwei Glasscheiben (13) und eine Zwischenlagenschicht, die zwischen den zwei Glasscheiben (13) eingerichtet ist, die Zwischenlagenschicht umfassend vorzugsweise PVB (Polyvinylbutyral) oder ein Ethylen-Vinylacetat-Copolymer.

12. Lautsprecher umfassend eine Verglasung (1) nach einem der vorstehenden Ansprüche.

13. Mikrofon, umfassend eine Verglasung (1) nach einem der vorstehenden Ansprüche.

14. Verfahren zum akustischen Aussenden und/oder zum akustischen Empfangen, das durch eine Verglasung (1) nach einem der Ansprüche 1 bis 11 realisiert wird, das Verfahren umfassend die Schritte:
- Senden oder Empfangen einer akustischen Welle zwischen dem Erreger (2) und der Glasbaugruppe (4) durch eine Ausbreitung der Welle in einem festen Medium, das durch den Abstandshalter (7) ausgebildet wird, und gleichzeitig
- Senden oder Empfangen der akustischen Welle zwischen dem Erreger (2) und der Glasbaugruppe (4) durch eine Ausbreitung der Welle in einem gasförmigen Medium, das durch den Hohlraum (12) ausgebildet wird.

## Claims

1. A vehicle glazing (1) suitable for acoustic emission and/or reception, comprising an exciter (2) and a glazed assembly (4), the exciter (2) comprising a connecting part (5) and a movable part (6), the exciter (2) being configured to drive a movement between the connecting part (5) and the movable part (6) by an electrical control,
the glazed unit (1) being **characterized in that** it comprises at least one spacer (7),
the connecting part (5) comprising a mounting part (8) and a suspended part (9),
the spacer (7) being fixedly mounted to the mounting part (8) and to the glazed assembly (4),
the suspended part (9) having a first face (10) and the glazed assembly (4) having a second face (11), the first face (10) being arranged facing the second face (11), the glazed unit (1) comprising a cavity (12) arranged between the first face (10) and the second face (11), the cavity (12) being formed in part by the first face (10) and preferentially in part by the second face (11).

2. The glazed unit (1) according to the preceding claim, wherein the cavity (12) is formed in part by the first face (10) and in part by the second face (11) and has a thickness e defined between the first face (10) and the second face (11), the thickness e between the first face (10) and the second face (11) being between 1 mm and 5 cm, in particular between 1.5 mm and 1.5 cm, and preferentially between 2 mm and 1 cm.

3. The glazed unit (1) according to one of the preceding claims, wherein the spacer (7) is fixedly mounted, removably, to the mounting part (8).

4. The glazed unit (1) according to one of the preceding claims, wherein the movable part (6) is encapsulated in the connecting part (5).

5. The glazed unit (1) according to one of the preceding claims, comprising a plurality of spacers (7), the connecting part (5) comprising a plurality of mounting parts (8), each spacer (7) being fixedly mounted to a mounting part (8), the mounting parts (8) being arranged around the suspended part (9).

6. The glazed unit (1) according to one of the preceding claims, wherein the spacer (7) is fixedly mounted to the glazed element (4) by bonding, the glazed element (4) comprising at least one glass sheet (13), the glazing unit (1) comprising a layer of glue (14) arranged between the glass sheet (13) and the spacer (7), the layer of glue (14) being in contact with the spacer (7), the layer of glue (14) preferentially comprising polyurethane, and the glazing unit (1) preferentially comprising a primer layer (15) arranged between the glass sheet (13) and the layer of glue (14).

7. A glazed unit (1) according to claim 6, wherein the spacer (7) comprises a bonding face (16) arranged at one end of the spacer (7), the bonding face (16) having at least one boss (17), the boss (17) being in direct contact with the glass sheet (13), the layer of glue (14) being in direct contact with the bonding face (16) and running along the boss (17), preferentially surrounding the boss (17).

8. The glazed unit (1) according to one of the preceding claims, wherein the spacer (7) is configured to adjust the thickness separating the glazed element (4) and the mounting part (8) on which the spacer (7) is fixedly mounted.

9. The glazed unit (1) according to claim 8, wherein the spacer (7) is a screw (18).

10. The glazed unit (1) according to claim 7, wherein the spacer is a screw (18), the screw (18) having a head (19) and a tip (20), the head (19) comprising the bonding face (16).

11. The glazed unit (1) according to one of the preceding claims, wherein the glazed assembly is a laminated glazed unit comprising at least two glass sheets (13) and an interlayer arranged between the two glass sheets (13), the interlayer preferably comprising PVB (polyvinyl butyral) or an ethylene vinyl acetate copolymer.

12. A loudspeaker comprising a glazed unit (1) according to one of the preceding claims.

13. A microphone comprising a glazed unit (1) according to one of the preceding claims.

14. A method of acoustic emission and/or reception implemented by a glazed unit (1) according to one of claims 1 to 11, the method comprising the steps of:
- transmitting or receiving an acoustic wave between the exciter (2) and the glazed assembly (4), by propagation of the wave in a solid medium formed by the spacer (7), and, simultaneously,
- transmitting or receiving the acoustic wave between the exciter (2) and the glazed assembly (4) by propagation of the wave in a gaseous medium formed by the cavity (12).
